# EUROPÄISCHE PATENTSCHRIFT

(11) **EP 0 976 013 B1**
(45) Veröffentlichungstag und Bekanntmachung des Hinweises auf die Patenterteilung: **12.02.2003**
(21) Anmeldenummer: 98920512.5
(22) Anmeldetag: 11.04.1998
(51) Int. Cl.: G05D 16/20

(54) **DRUCKREGELVENTIL**
PRESSURE REGULATING VALVE
SOUPAPE DE REGLAGE DE PRESSION

(30) Priorität: 18.04.1997 DE 19716135; 10.10.1997 DE 19744696
(43) Veröffentlichungstag der Anmeldung: 02.02.2000
(73) Patentinhaber: ZF FRIEDRICHSHAFEN Aktiengesellschaft, 88038 Friedrichshafen (DE)
(72) Erfinder: FREI, Walter, D-88045 Friedrichshafen (DE); GIERER, Georg, D-88079 Kressbronn (DE); REMMLINGER, Hubert, D-88046 Friedrichshafen (DE); MAYR, Karlheinz, D-88142 Wasserburg (DE); SCHMID, Wolfgang, D-88085 Langenargen (DE); SCHMIDT, Thilo, D-88074 Meckenbeuren (DE); RUNGE, Wolfgang, D-88214 Ravensburg (DE)
(86) Internationale Anmeldenummer: EP9802128
(87) Internationale Veröffentlichungsnummer: WO98048332

(56) Entgegenhaltungen:
- EP-A- 0 149 239
- EP-A- 0 284 769
- EP-A- 0 334 030
- EP-A- 0 645 291
- WO-A-92/09836
- DE-A- 3 412 351
- DE-A- 3 417 383
- DE-A- 4 426 152

## Beschreibung

Die vorliegende Erfindung betrifft ein Proportional-Druckregelventil vom 3/2-Wegetyp, bestehend aus einem Ventilgehäuse, das einen Regeldruckraum aufweist und mit einer Druckmittelzuführleitung, mit einer mit dem Verbraucher in Verbindung stehenden Arbeitsdruckleitung und einer Druckmittelsumpfleitung und mit mindestens zwei Blendenstufen mit definiertem oder definierbarem Strömungswiderstand, wovon zwei Blendenstufen nach dem Prinzip der hydraulischen Halbbrücke miteinander gekoppelt sind.

Die DE-C 44 26 152 beschreibt ein elektromagnetisches Druckregelventil, insbesondere für die Schaltdruckregelung von automatischen Kraftfahrzeuggetrieben, das ein Ventilgehäuse und einen von einem Magnetanker betätigbaren und mit diesem verbundenen Steuerschieber aufweist, das Anschlüsse von einem Druckmittelzulauf zu einem Verbraucheranschluß bzw. einem Rücklauf oder Tank steuert. Der Steuerschieber ist in einer hinteren und in einer vorderen Lagerstelle im Ventilgehäuse gelagert und über eine Einstellfeder vorgespannt. Mit diesem Druckregelventil kommt es zu keinen Veränderungen der Ventilkennung über die Lebensdauer aufgrund von Problemen durch Schmutzöl, da ein Druckgefälle bezüglich einer Durchströmung, insbesondere des schmutzempfindlichen Ankerraumes, vermieden wird. Im Eintrittsbereich am Lagerspalt und an der Austrittsöffnung des Stromfadens aus der Lüfterbohrung herrscht das gleiche Geschwindigkeitsenergiepotential.

Aus der US 3,916,932 ist ferner ein Ventil bekannt, welches zwei nach dem Prinzip der hydraulischen Halbbrücke gekoppelte Blendenstufen aufweist und als Mengenregler zur Teilung eines Druckmittelstromes in einem Haupt- und einem Nebenstrom Verwendung findet.

Die US 5,135,027, die den nächsten Stand der Technik bildet, beschreibt ein Druckregelventil mit einem Anschluß für eine Druckleitung, einem Anschluß für eine Arbeitsdruckleitung, einem Anschluß für eine Auslaßleitung zum Umgebungsdruck und mindestens zwei Blendenstufen mit definiertem oder definierbarem Strömungswiderstand, wovon zwei Blendenstufen variabel und unter mechanischer bzw. hydraulischer Einwirkung nach dem Prinzip der hydraulischen Halbbrücke gekoppelt sind. Die beiden variablen Blendenstufen sind als Einlaß- und Auslaßblende eines Regeldruckraums vorgesehen und weisen jeweils einen Verschlußkörper auf, wobei der Verschlußkörper der Einlaßblende als Kugel ausgebildet ist und der Verschlußkörper der Auslaßblende eine kegelige Dichtfläche aufweist.

Bekannte Ventile weisen oft den Nachteil auf, daß sie entweder einen minimalen Arbeitsdruck nahe Null bar erreichen oder daß der Leckagefluß des Druckmittels bei minimalem Arbeitsdruck annähernd zu Null minimiert ist.

Aufgabe der vorliegenden Erfindung ist es, ein Proportional-Druckregelventil, insbesondere für die Schaltdruckregelung von automatischen Kraftfahrzeuggetrieben zu schaffen, bei dem der minimale Arbeitsdruck nahezu Null ist und der Leckagefluß des Druckmittels in der Endstellung des Steuerschiebers mit minimalem Arbeitsdruck annähernd zu Null minimiert ist und welches eine Anpassung der Strömungseigenschaften des Ventils an die jeweiligen Einsatzbedingungen ermöglicht.

Ausgehend von einem Druckregelventil der eingangs näher genannten Art erfolgt die Lösung dieser Aufgabe mit den im Anspruch 1 angegebenen Merkmalen; vorteilhafte Ausgestaltungen der Erfindung sind in den Unteransprüchen beschrieben.

Das Druckregelventil ist als gekoppeltes Drossel- oder Blendensystem ausgebildet (im folgenden wird stellvertretend für Drossel oder Blende der Begriff Blende verwendet). Das gekoppelte Blendensystem besteht aus zwei mechanisch, bzw. hydraulisch gekoppelten Regelblenden. Diese Regelblenden sind nach dem Prinzip der hydraulischen Halbbrücke verschaltet. Vor den beiden Regelblenden kann eine Festblende vorgeschaltet sein. Dieses gekoppelte Blendensystem weist drei Anschlüsse auf: eine Druckmittelzufuhrleitung (Anschluß P), eine Arbeitsdruckleitung zum Verbraucher (Anschluß A) und eine Druckmittelsumpfleitung zum Druckmittelsumpf (Anschluß T). Der Anschluß P ist eingangsseitig vor der ersten Regelblende bzw. der Festblende, der Anschluß A ist z. B. zwischen den beiden Regelblenden angeordnet und der Anschluß T befindet sich ausgangsseitig hinter der zweiten Regelblende. Jede der Blenden stellt einen Strömungswiderstand dar. Die beiden Regelblenden sind dabei verstellbare Strömungswiderstände. Das Funktionsprinzip dieses druckgeregelten Ventils arbeitet analog dem eines elektrischen Spannungsteilers mit zwei gekoppelt verstellbaren Schiebewiderständen bzw. mit einem vorgeschalteten Festwiderstand und zwei gekoppelt verstellbaren Schiebewiderständen. Jede der Blenden bewirkt einen gewissen Druckabfall. Eingangsseitig der ersten Regelblende bzw. der Festblende herrscht Zulaufdruck vor, während ausgangsseitig nach der zweiten Regelblende Umgebungsdruck herrscht. Der Druck zwischen den beiden Regelblenden ist je nach Öffnung der Blenden zwischen Umgebungsdruck und Zulaufdruck einstellbar. Die beiden Regelblenden bilden dabei Einlaß- und Auslaßöffnung eines Regeldruckraumes und weisen jeweils einen Verschlußkörper zum öffnen und Schließen der Blenden auf. Dabei ist erfindungsgemäß der Verschlußkörper der Einlaßblende als Kugel und der Verschlußkörper der Auslaßblende als Zylinder ausgebildet. Vorteilhafterweise können somit die Ein- und Ausströmcharakteristik der beiden Regelblenden auf die jeweilige Einsatzbedingung des Ventils bestmöglichst eingestellt werden. Dabei ist beispielsweise die Art jeder einzelnen Blende als Sitzventil und somit die Form der Dichtfläche sowie auch die Druckverstärkung durch jede Blende individuell optimiert.

Die beiden Regelblenden sind durch einen Steuerschieber gekoppelt. Dabei müssen die Blenden, insbesondere die Verschlußkörper, nicht starr bzw. einstückig mit dem Steuerschieber verbunden sein, sondern können auch separat ausgebildet sein und lose an dem Steuerschieber anliegen, wobei die Anlagekraft durch den Strömungswiderstand einer losen Blende im Druckmittelstrom hervorgerufen wird. Durch Bewegung des Steuerschiebers in eine Richtung wird der Querschnitt der Einlaßblende vergrößert und gleichzeitig derjenige der Auslaßblende verringert. Bei Bewegung des Steuerschiebers in Gegenrichtung verändern sich die Querschnitte in umgekehrter Weise. Dies entspricht dem Funktionsprinzip einer hydraulischen Halbbrücke. Dabei kann es, je nach Ausgestaltung der Kopplung, Positionen des Steuerschiebers geben, bei denen eine Blende bereits voll geöffnet ist, während die andere noch nicht völlig geschlossen ist (negative Überdeckung der Steuerkanten). Bei einem möglichen Betriebszustand ist die Einlaßblende bereits vollständig geöffnet und die Auslaßblende noch nicht völlig geschlossen. Das System zweier gekoppelten Regelblenden reduziert sich in diesem Betriebszustand auf ein System mit fester Einlaßblende und regelbarer Auslaßblende.

Ist bei einem System zweier gekoppelter Regelblenden mit vorgeschalteter Festblende der Strömungswiderstand der Einlaß-Regelblende deutlich geringer als derjenige der vorgeschalteten Festblende, so fällt die Einlaß-Regelblende für den sich einstellenden Regeldruck nicht mehr ins Gewicht. Das System aus einer vorgeschalteten Festblende mit zwei nachfolgenden, gekoppelten Regelblenden reduziert sich in diesem Betriebszustand auf ein System mit fester Einlaßblende und regelbarer Auslaßblende. Mittels eines jeweils solchen reduzierten Systems werden beispielsweise nach dem gegenwärtigen Stand der Technik mechanische Schaltdrücke zur Getriebesteuerung geregelt. Das bedeutet, in diesem Betriebszustand kann die bei herkömmlichen Sitzventilen über Jahre gewonnene Erfahrung genutzt werden.

Das System mit zwei gekoppelten Regelblenden hat gegenüber dem System mit einer Regelblende und einer Festblende den Vorteil, daß bei voll geöffneter Auslaßblende der Durchfluß nicht wie im System aus Fest- und Regelblende maximal ist, sondern durch den Verschluß der Einlaßregelblende zu Null minimiert wird. Selbiges gilt auch bei zusätzlich vorgeschalteter Festblende. Der Betriebszustand "voll geöffnete Auslaßblende" entspricht in beiden Systemen und in dem reduzierten System mit fester Einlaßblende und regelbarer Auslaßblende dem minimalen Regeldruck. Im System mit zwei gekoppelten Regelblenden - mit oder ohne vorgeschalteter Festblende - wird dieser niedrigste, einstellbare Regeldruck durch Abriegelung des Einlasses auf Umgebungsdruck jenseits des Auslasses minimiert, während im System aus Fest- und Regelblende ein endlicher Restdruck durch hydrodynamische Effekte verbleibt. Der mittlere Durchfluß ist im System aus Fest- und Regelblende höher. Dies bringt eine höhere Verlustleistung im Vergleich zum System mit zwei gekoppelten Regelblenden mit sich. Ein weiterer Vorteil ist, daß infolge des geringeren maximalen Durchflusses die Pumpe zum Bereitstellen des Zulaufdruckes schwächer dimensioniert werden kann.

Gemäß einer ersten Ausbildung der Erfindung ist das Druckregelventil als ein System von zwei mechanisch oder hydraulisch gekoppelten, variablen Blendenstufen aufgebaut. Dieses zeichnet sich vorteilhafterweise durch einen einfachen, kostengünstigen Aufbau aus.

In einer vorteilhaften Weiterbildung der Erfindung ist das Ventil als ein System von drei Blendenstufen aufgebaut, mit einer ersten druckseitigen, festen Blendenstufe und zwei gekoppelten variablen Blendenstufen, wodurch mehrere Einstellmöglichkeiten der Strömungseigenschaften bestehen als bei der vorgenannten Ausbildung von nur zwei variablen Blendenstufen.

Dieses erfindungsgemäße Druckregelventil wird vorteilhaft zur Regelung des Hydraulikdrucks zum Betätigen von Getriebeschaltungen verwendet.

In einer vorteilhaften Ausgestaltung der Erfindung sind die zwei variablen Blendenstufen in einem Bauteil untergebracht. Die Einlaßblende in den Regeldruckraum ist in Form von einer eine Zulauföffnung bildende Bohrung durch ein Ventilgehäuse dargestellt, die mit einem Verschlußkörper überdeckt werden kann. Die Auslaßblende ist in Form eines Sitzventils ausgebildet, in dem eine axiale Wandfläche des Ventilgehäuses eine Dicht- bzw. Stirnfläche eines Verschlußkörpers, insbesondere einer Ankerstange, überdeckt. Ein stiftförmiger Steuerschieber, der sich in axialer Richtung an die Ankerstange anschließt, kann den Verschlußkörper der Einlaßblende aus seinem Sitz herausschieben. Der Steuerschieber stellt die beiden Blenden gekoppelt ein, indem er einerseits den Einlaßblendenquerschnitt durch Überdeckung der Zulauföffnungsfläche mit dem Verschlußkörper festlegt und andererseits die Auslaßblendenfläche durch den Abstand zwischen der axialen Wandfläche und der Stirnfläche bestimmt. Bei geschlossenem Auslaß liegt die Stirn- bzw. Dichtfläche der Ankerstange an der Wandfläche des Ventilgehäuses an. Der stiftförmige Steuerschieber schiebt dabei den Verschlußkörper der Einlaßblende aus seinem Sitz in der Zulauföffnung heraus. Die Zulauföffnung in den Regeldruckraum ist in dieser Stellung vollständig freigegeben. Durch axiale Bewegung des Steuerschiebers öffnet sich die Auslaßblende und bewirkt einen Druckabfall in dem Regeldruckraum und damit in der Arbeitsleitung. Bei weiterem öffnen des Auslaßquerschnitts wird der stiftförmige Steuerschieber weiter zurückgezogen. Der Verschlußkörper der Einlaßblende nähert sich damit der Zulauföffnung, und der effektive Zulaufquerschnitt nimmt ab. Bei nahezu vollständig geöffnetem Auslaß wird die Zulauföffnung völlig abgeriegelt. Der Regeldruckraum wird dann vom Zulauf komplett getrennt und es stellt sich dort Umgebungsdruck ein.

Der Verschlußkörper muß nicht einteilig mit dem Steuerschieber bzw. der Ankerstange verbunden sein, d. h., die Bauteile sind zwei- oder mehrteilig ausgeführt. Die Strömung bzw. der Druck des Druckmittels läßt ihn an dem Steuerschieber anliegen und führt ihn beim Rückzug des Steuerschiebers diesem nach. Vorteilhafterweise ist zur Aufnahme des Verschlußkörpers, insbesondere, wenn dieser nicht einstückig mit dem Steuerschieber verbunden ist, ein Käfig vorgesehen, welcher auch zur gezielten Einstellung der Einströmcharakteristik eingesetzt werden kann.

Da die Zulauföffnung einen Teil der Stirnfläche einer zylinderförmigen Ventilkammer bildet, hat die auf diese Fläche wirkende Kraft eine axiale Komponente, so daß zum öffnen dieses Zulaufs durch axiales Verschieben des Steuerschiebers und damit Entfernen des Verschlußkörpers aus seinem Sitz in der Zulauföffnung bei unterschiedlichem Druck in dem Regeldruckraum und Zulauf eine hydrostatische Haltekraft zu überwinden ist. Diese Haltekraft ergibt sich aus der Differenz des mittleren Druckes in dem Zulauf und dem Regeldruckraum multipliziert mit der Fläche der Zulauföffnung. Daher wird die Zulauföffnung nicht zu groß dimensioniert, um eine akzeptable Ventilkennung zu erhalten. Bei geöffnetem Ventil ergibt sich die Axialkraft auf den Anker als Summe des Produktes aus einem Mittelwert des Druckes in dem Regeldruckraum, der näherungsweise dem Arbeitsdruck im Verbraucher entspricht, und der freien Ankerfläche (volle Ankerfläche minus Querschnittsfläche des Steuerschiebers) und der durch den Staudruck bewirkten Kraft auf den Verschlußkörper.

Vorteilhafterweise ist der Verschlußkörper einstückig mit dem Steuerschieber ausgebildet.

Vorzugsweise wird das Druckregelventil magnetisch betätigt. Die Stellkraft dieses Druckregelventils ist dabei die Kraft, die ein Elektromagnet auf das induzierte, magnetische Moment eines Weicheisenankers ausübt. Der Weicheisenanker ist vorteilhaft auf der Ankerstange aufgepreßt.

Als technische Variante kann das Druckregelventil auch piezoelektrisch oder pneumatisch betätigt werden.

In einer anderen vorteilhaften Ausgestaltung der Erfindung sind drei Blenden in einem diskreten Bauteil untergebracht. Die drei Blenden setzen sich aus einer zulaufseitigen Festblende und zwei gekoppelten Regelblenden zusammen. Die zulaufseitige Festblende kann dabei als vorgeschaltete Blende, aber auch als Drossel in Form von einer oder mehrerer Bohrungen ausgeführt sein. Die gekoppelten Regelblenden bilden Einlaß und Auslaß eines Regeldruckraums. Die geregelte Einlaßblende wird durch mindestens eine radiale Zulaufbohrung durch ein Ventilgehäuse in Zusammenwirken mit einem Steuerschieber dargestellt, der sich teilweise in den zylinderförmigen, hohlen Regeldruckraum hinein erstreckt. Dieser Steuerschieber ist innerhalb des Regeldruckraumes über eine gewisse Länge axial beweglich.

Vorzugsweise sind die Ankerstange und der Steuerschieber einteilig ausgeführt.

Vorzugsweise weist die Einlaßregelblende mehrere radiale Zulaufbohrungen im Ventilgehäuse auf, die über einen Ringkanal mit der vorgeschalteten Festblende verbunden sind.

In einer vorteilhaften Ausgestaltung der Erfindung ist eine Dichtfläche auf einer Stirnseite der Ankerstange vorgesehen, wobei diese Dichtfläche mit einer korrespondierenden Dichtfläche am Ventilgehäuse zusammenwirkt und somit eine Flachsitzdichtung mit besten Dichteigenschaften ermöglicht.

In einer weiteren Ausbildung wird nun vorgeschlagen, den Bereich zwischen der als Dichtfläche ausgebildeten Stirnfläche der Ankerstange und dem Steuerschieber kegelstumpfförmig auszubilden. Damit werden vorteilhafterweise die guten Dichteigenschaften eines Flachsitzes mit einer günstigen, nämlich möglichst niedrigen, Ausbildung der Druckverstärkung durch den Kegelstumpf kombiniert, wobei die Basis des Kegelstumpfes auf der Stirnfläche der Ankerstange angeordnet ist.

In einer vorteilhaften Weiterbildung der Erfindung wird vorgeschlagen, den Anker auf die Ankerstange aufzupressen.

In einer weiteren Ausbildung der Erfindung wird das Druckregelventil vorteilhafterweise derart ausgebildet, dass der Durchmesser des stiftförmigen Steuerschiebers kleiner ist als der Durchmesser der Ankerstange.

Als besonders vorteilhafte Verwendung der Erfindung wird vorgeschlagen, das Druckregelventil zum Regeln des Hydraulikdrucks für die Betätigung von Getriebeschaltelementen in einem Kraftfahrzeug einzusetzen.

Im folgenden wird die Erfindung anhand von Zeichnungen näher erläutert, in der vorteilhafte Ausführungsbeispiele dargestellt sind.
Es zeigen:

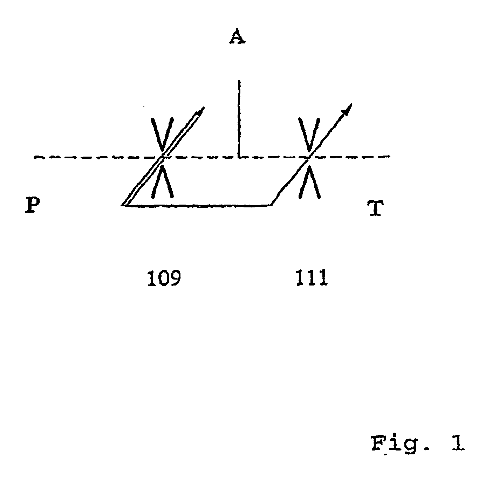

- Fig. 1: ein Prinzip-Schaltbild eines Druckregelventils mit zwei gekoppelten Regelblenden;

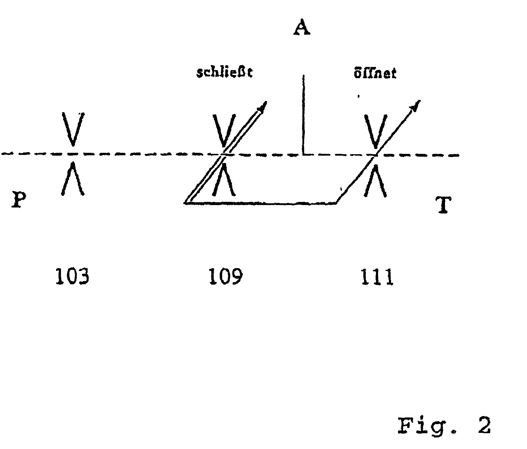

- Fig. 2: ein Prinzip-Schaltbild eines Druckregelventils mit zwei gekoppelten Regelblenden und einer vorgeschalteten Festblende;
- Fig. 3: einen Schnitt durch ein Druckregelventil in einer ersten Ausgestaltung der Erfindung;
- Fig. 4: ein Druckstrom-Leckagediagramm und
- Fig. 5-8: schematische Darstellungen von Druckregelventilen mit erfindungsgemäßer Kombination der Verschlußkörper.

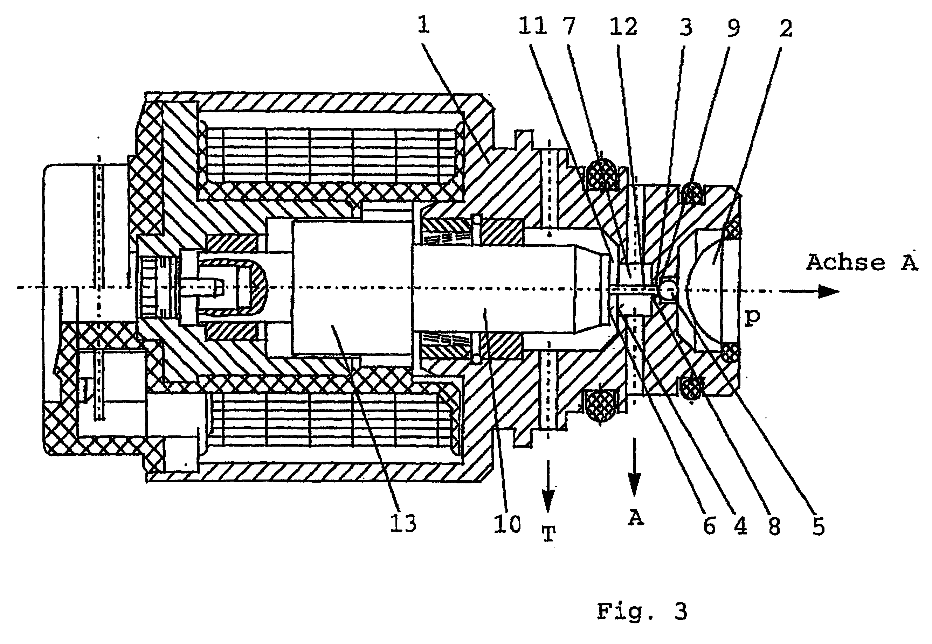

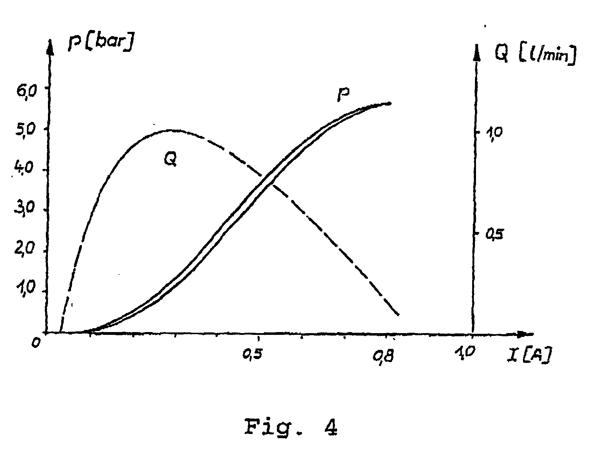

Das Druckregelventil in der ersten Ausgestaltung der Erfindung, wie es in Fig. 3 dargestellt ist, wirkt als 3/2-Wegeventil mit Abriegelung des Druckmittels in der Druckmittelzuführung 2 bei großen Arbeitshüben. Die Funktion entspricht dabei derjenigen einer hydraulischen Halbbrücke. Die Druckmittelzuführung 2 mündet vorzugsweise über eine axial angeordnete Zulaufbohrung in den Regeldruckraum 7. In herkömmlicher Weise weist das Druckregelventil, dessen Gehäuse mit 1 bezeichnet ist, einen Elektromagneten auf, der einen Anker 13 in Richtung der Achse A gegen die Wirkung einer Feder verschiebt. Der Anker 13 stellt über eine Ankerstange 10 den Steuerschieber 12. Der Steuerschieber 12, der sich an die als Dichtfläche ausgebildete Stirnfläche 6 der Ankerstange 10 anschließt, ist in Form eines Stiftes ausgeführt, der einen als Kugel ausgebildeten Verschlußkörper 5 aus seinem Sitz in der Zulauföffnung 8 herausschieben kann. Ankerstange 10, Steuerschieber 12 und Verschlußkörper 5 können ein-, zwei-, drei- oder mehrstückig ausgebildet sein. In einer Endstellung des Druckregelventils verschließt der Verschlußkörper 5 die Bohrung der Zulauföffnung 8 der Druckmittelzuführung 2 in den Regeldruckraum 7 vollständig. In der anderen Endstellung liegt die als Steuerkante 11 des Ablaufs wirkende Stirnfläche 6 axial an der Wandfläche 4 des Ventilgehäuses 1 an. Gleichzeitig wird der Verschlußkörper von dem stiftförmigen Steuerschieber 12 aus seinem Sitz herausgeschoben und die Zulauföffnung 8 der Druckmittelzuführung 2 freigegeben, so daß das unter Druck stehende Druckmittel vollständig den Regeldruckraum 7 und damit den Verbraucher mit Druck beaufschlagt. In beiden Endstellungen der Ankerstange 10 bzw. des Steuerschiebers 12 ist der Druckmittelstrom einerseits durch Absperrung des Zulaufs zum Regeldruckraum 7, andererseits des Ablaufs zum Druckmittelsumpf unterbrochen. Dazwischen erreicht bei zunehmendem Druck p des in den Regeldruckraum 7 einfließenden Druckmittels der Volumenstrom Q ein Maximum, wie es aus Fig. 4 hervorgeht.

Die vollständige Absperrung der Zulauföffnung 8 der Druckmittelzuführung 2 durch den Verschlußkörper 5 bewirkt also eine Minimierung der Druckmittelleckage, wobei wegen der axialen Druckmittelzuführung das Druckmittel eine geringe staudruckbedingte Axialkraft auf den Verschlußkörper 5 und damit auf den Steuerschieber 12 und die Ankerstange 10 ausübt. Die Stellkräfte zum Verschieben des Steuerschiebers 12, d. h. zum Verrücken des Verschlußkörpers 5 aus seinem Sitz in der Zulauföffung sind aber gering. Die interne Druckrückführung von dem Regeldruckraum 7 auf die als Ankerwirkfläche wirkende Dichtfläche 6 der Ankerstange 10 ermöglicht eine unkomplizierte Regelfunktion. Der Ankerraum ist wie bei dem herkömmlichen, in DE-C 44 26 152 beschriebenen, in Serie verbauten Sitzventil drucklos. Die bei herkömmlichen 2/2-Sitzventilen auftretende Problematik, daß dieser drucklose Ankerraum durch Eintreten des Leckage-Druckmittels durchspült wird und sich dabei Eisenabriebteilchen als Verschmutzung absetzen, wird bei dem erfindungsgemäßen Druckregelventil durch die Abriegelung des Zulaufs in die Regeldruckkammer in der Endstellung "minimaler Arbeitsdruck" verringert, denn: bei herkömmlichen 2/2-Wege-Druckregel-Sitzventilen ist in der Stellung "minimaler Druck" der Durchfluß maximal und damit auch der Zustrom und der Eintrag der Verschmutzungsteilchen. Schließlich erzielt man einen größeren nutzbaren Druckbereich, da kein durch den Staudruck bedingter Restdruck auftritt (Fig. 4). Späne der Größenklasse bis 200 µm Durchmesser, wie sie z. B. als Erstmontageschmutz auftreten, können an der Steuerkante 9, die durch das Zusammenwirken des Verschlußkörpers 5 und der Zulaufbohrung gebildet wird, eingeklemmt werden. In diesem Arbeitshub kann der Zulauf nicht vollständig abgeriegelt werden. Es verbleibt ein geringer Durchfluß zum Druckmittelsumpf. Ein Festfressen des Verschlußkörpers 5 durch diesen Spaneintrag ist infolge der geringen Verschiebekräfte in dieser Stellung des Steuerschiebers 12 oder im Fall eines losen Verschlußkörpers 5 infolge der geringen Staudruckkräfte des Druckmittels auf den Verschlußkörper 5 nicht möglich. Die aufgrund der geringen Verschiebekräfte geringen Klemmkräfte führen nicht zu einer Beschädigung der Steuerkante durch Eindrücken des Spans. Wird beim nächsten Arbeitshub die Zulaufbohrung wieder geöffnet, wird der Span wieder freigegeben.

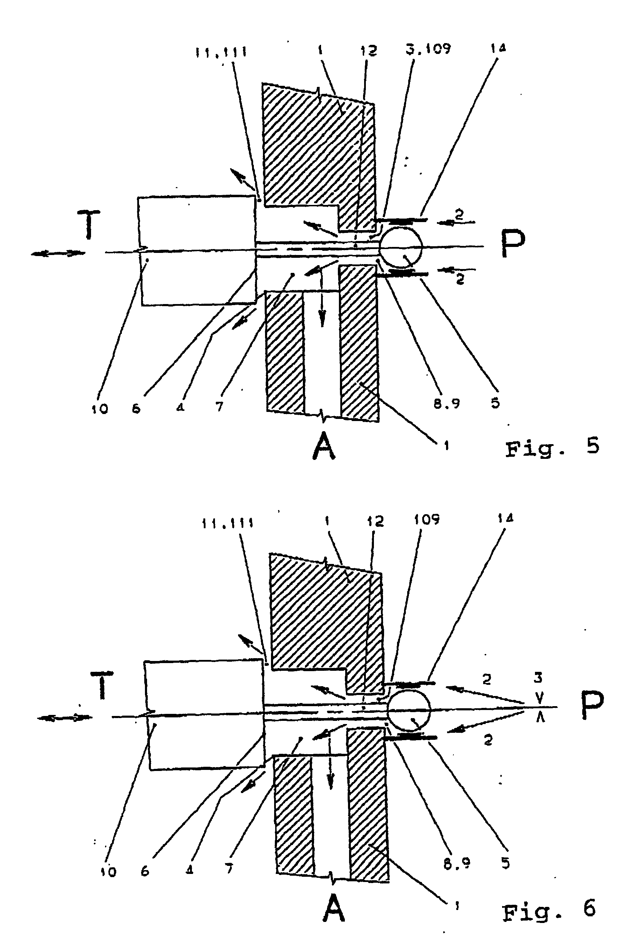

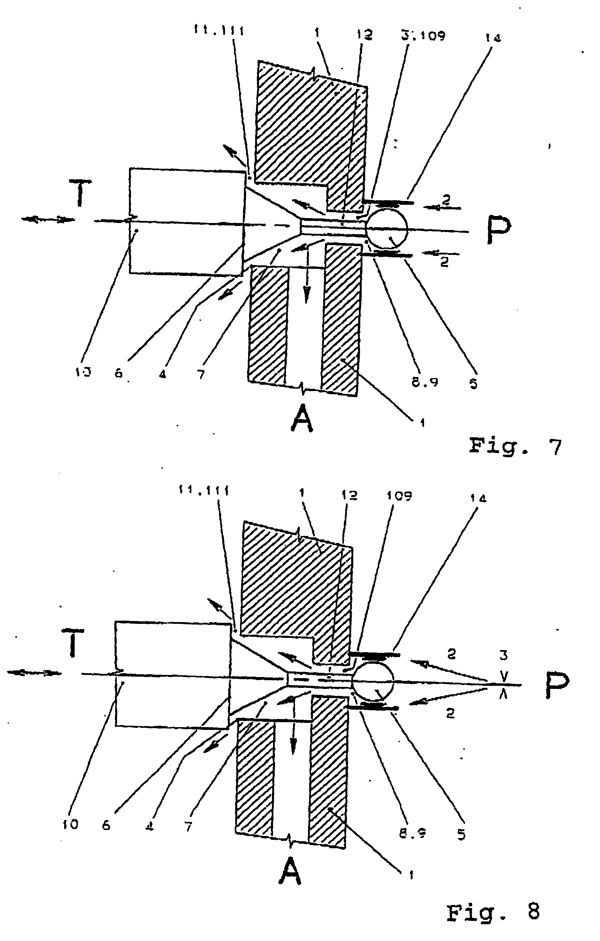

In den Fig. 5-8 sind Ventilausführungen gezeigt, welche für die Auslaßblende 111 einen zylindrischen Verschlußkörper mit Flachsitz vorsehen; die Verschlußkörper 5 der Einlaßblende 109 werden durch eine Kugel als Sitzventil gebildet. In den Fig. 7 und 8 weist der Verschlußkörper im Auslaß 111 eine Flachsitzdichtung mit einem zusätzlichen, vorgelagerten Kegelstumpf auf.

Die Fig. 6 und 8 entsprechen dabei im wesentlichen den Fig. 5 und 7, weisen jedoch zusätzlich noch eine vorgeschaltete Festblende 3 auf.

### Bezugszeichen

- 1: Ventilgehäuse
- 2: Druckmittelzuführung
- 3: Zulaufblende
- 4: Wandfläche/-linie
- 5: Verschlußkörper
- 6: Stirn-/Dichtfläche
- 7: Regeldruckraum
- 8: Zulauföffnung
- 9: Steuerkante (des Zulaufs)
- 10: Ankerstange
- 11: Steuerkante (des Ablaufs)
- 12: Steuerschieber
- 13: Anker
- 14: Käfig

- 109: Einlaßblende
- 111: Auslaßblende

- A: Arbeitsdruckleitung
- T: Druckmittelsumpfleitung
- P: Druckleitung
- p: Druck
- Q: Volumenstrom

## Patentansprüche

1. Druckregelventil, mit einem Anschluß für eine Druckleitung (P), einem Anschluß für eine Arbeitsdruckleitung (A) und einem Anschluß für eine Auslaßleitung (T) zum Umgebungsdruck und mit mindestens zwei Blendenstufen mit definiertem oder definierbarem Strömungswiderstand, wovon zwei Blendenstufen (109, 111) variabel und unter mechanischer bzw. hydraulischer Einwirkung nach dem Prinzip der hydraulischen Halbbrücke gekoppelt sind und die beiden variablen Blendenstufen als Einlaß- und Auslaßblende eines Regeldruckraums vorgesehen sind und jeweils einen Verschlußkörper aufweisen, wobei der Verschlußkörper der Einlaßblende als Kugel (5) ausgebildet ist und der Verschlußkörper der Auslaßblende eine Dichtfläche (6) mit einem Flachsitz aufweist, **dadurch gekennzeichnet, daß** der Durchmesser der Kugel (5) kleiner ist als der Durchmesser der Dichtfläche (6) des Flachsitzes.

2. Druckregelventil nach Anspruch 1, **dadurch gekennzeichnet, daß** es magnetisch oder elektromagnetisch betätigbar ist.

3. Druckregelventil nach Anspruch 1, **dadurch gekennzeichnet, daß** es piezoelektrisch oder pneumatisch betätigbar ist.

4. Druckregelventil nach Anspruch 1 oder Anspruch 2, **dadurch gekennzeichnet, daß** ein Elektromagnet mit einem Anker (13) und einer Ankerstange (10) vorgesehen ist und die Ankerstange (10) mit einem stiftförmigen Steuerschieber (12) zusammenwirkt, der sich in axialer Richtung an die Ankerstange (10) anschließt und den Verschlußkörper der Einlaßblende aus seinem Sitz herausschieben kann und damit die beiden Blenden gekoppelt einstellt.

5. Druckregelventil nach einem der vorhergehenden Ansprüche, **dadurch gekennzeichnet, daß** es als System von zwei, unter mechanischer bzw. hydraulischer Einwirkung gekoppelten, variablen Blendenstufen (109, 111) aufgebaut ist.

6. Druckregelventil nach einem der Ansprüche 1 bis 4, **dadurch gekennzeichnet, daß** es als System von drei Blendenstufen aufgebaut ist mit einer ersten, druckseitigen, festen Blendenstufe (103) und zwei, unter mechanischer bzw. hydraulischer Einwirkung gekoppelten, variablen Blendenstufen (109, 111).

7. Druckregelventil nach einem der vorhergehenden Ansprüche, **dadurch gekennzeichnet, daß** der Verschlußkörper (5) einstückig mit dem Steuerschieber (12) ausgebildet ist.

8. Druckregelventil nach einem der vorhergehenden Ansprüche, **dadurch gekennzeichnet, daß** die zwei variablen Blendenstufen in einem Bauteil untergebracht sind, wobei die Einlaßblende in den Regeldruckraum (7) in Form von einer Bohrung durch ein Ventilgehäuse (1) ausgebildet ist, die mit einem Verschlußkörper überdeckt werden kann, und die Auslaßblende in Form eines Sitzventils ausgebildet ist, indem eine axiale Wandfläche (4) des Ventilgehäuses (1) eine Dichtfläche (6) des Verschlußkörpers überdeckt und wobei der stiftförmige Steuerschieber (12) den Verschlußkörper der Einlaßblende aus seinem Sitz herausschieben kann und damit die beiden Blenden gekoppelt einstellt, indem er einerseits den Einlaßblendenquerschnitt durch Überdeckung der Zulaufbohrungsfläche mit dem Verschlußkörper festlegt und andererseits die Auslaßblendenfläche durch den Abstand zwischen der axialen Wandfläche (4) und der Dichtfläche (6) bestimmt.

9. Druckregelventil nach einem der vorhergehenden Ansprüche, **dadurch gekennzeichnet, daß** die Ankerstange (10) und der Steuerschieber (12) zweiteilig ausgebildet sind.

10. Druckregelventil nach Anspruch 9, **dadurch gekennzeichnet, daß** ein Käfig (14) zur Aufnahme des Verschlußkörpers (5) vorgesehen ist.

11. Druckregelventil nach einem der Ansprüche 4 bis 8, **dadurch gekennzeichnet, daß** die Ankerstange (10) und der Steuerschieber (12) einteilig ausgeführt sind.

12. Druckregelventil nach einem der Ansprüche 4 bis 11, **dadurch gekennzeichnet, daß** seine Stellkraft durch die Kraft aufgebracht wird, die ein Elektromagnet auf das induzierte, magnetische Moment eines Weicheisenankers ausübt.

13. Druckregelventil nach einem der Ansprüche 4 bis 12, **dadurch gekennzeichnet, daß** die Einlaßblende mehrere radiale Zulaufbohrungen im Ventilgehäuse (1) aufweist, die über einen Ringkanal mit einer vorgeschalteten Festblende als erste Blendenstufe verbunden sind.

14. Druckregelventil nach einem der Ansprüche 4 bis 13, **dadurch gekennzeichnet, daß** die Dichtfläche (6) an einer Stirnseite der Ankerstange (10) vorgesehen ist.

15. Druckregelventil nach Anspruch 14, **dadurch gekennzeichnet, daß** der Bereich zwischen der Stirnfläche der Ankerstange (10) und dem Steuerschieber (12) kegelstumpfförmig ausgebildet ist.

16. Druckregelventil nach einem der Ansprüche 4 bis 15, **dadurch gekennzeichnet, daß** der Anker (13) auf die Ankerstange (10) aufgepreßt ist.

17. Druckregelventil nach einem der vorgenannten Ansprüche, **dadurch gekennzeichnet, daß** der Durchmesser des stiftförmigen Steuerschiebers (12) kleiner ist als der Durchmesser der Ankerstange (10).

18. Verwendung eines Druckregelventils nach einem der vorhergehenden Ansprüche zum Regeln des Hydraulikdrucks für die Betätigung von Getriebeschaltelementen in einem Kraftfahrzeug.

## Claims

1. Pressure-regulating valve with a connection for a pressure line (P), a connection for a working pressure line (A) and a connection for an outlet line (T) to the ambient air and having at least two throttle stages with defined or definable flow resistance, two of which throttle stages (109, 111) are variable and mechanically or hydraulically coupled to operate on the hydraulic half-bridge principle, and the two variable throttle stages are provided as an inlet and outlet orifice of a control pressure chamber and respectively have a closure element, the closure element of the inlet orifice being provided in the form of a ball (5) and the closure element of the outlet orifice having a sealing surface (6) with a flat seat, **characterised in that** the diameter of the ball (5) is smaller than the diameter of the sealing surface (6) of the flat seat.

2. Pressure-regulating valve as claimed in claim 1, **characterised in that** it is magnetically or electromagnetically operable.

3. Pressure-regulating valve as claimed in claim 1, **characterised in that** it is piezoelectrically or pneumatically operable.

4. Pressure-regulating valve as claimed in claim 1 or claim 2, **characterised in that** a solenoid with an armature (13) and an armature rod (10) is provided and the armature rod (10) co-operates with a pin-shaped slide valve (12) which adjoins the armature rod (10) in the axial direction and is able to push the closure element of the inlet throttle out of its seat, thereby adjusting the two coupled throttles.

5. Pressure-regulating valve as claimed in one of the preceding claims, **characterised in that** it is designed as a system with two mechanically and hydraulically coupled variable throttle stages (109, 111).

6. Pressure-regulating valve as claimed in one of claims 1 to 4, **characterised in that** it is designed as a system with a first pressure-side fixed throttle stage (103), and two mechanically or hydraulically coupled variable throttle stages (109, 111).

7. Pressure-regulating valve as claimed in one of the preceding claims, **characterised in that** the closure element (5) is integral with the slide valve (12).

8. Pressure-regulating valve as claimed in one of the preceding claims, **characterised in that** the two variable throttle stages are housed in one component, the inlet orifice to the control pressure chamber (7) being provided in the form of a bore through a valve housing (1), which can be covered by a closure element, and the outlet orifice being provided in the form of a seat valve, in which an axial wall surface (4) of the valve housing (1) overlaps with a sealing surface (6) of the closure element and in which the pin-shaped slide valve (12) is able to push the closure element of the inlet orifice out of its seat, thereby adjusting the two coupled throttles, on the one hand by fixing the inlet orifice cross-section by overlapping the inlet bore surface with the closure element and by defining the outlet orifice surface on the basis of the distance between the axial wall surface (4) and the sealing surface (6) on the other hand.

9. Pressure-regulating valve as claimed in one of the preceding claims, **characterised in that** the armature rod (10) and the slide valve (12) are made in two parts.

10. Pressure-regulating valve as claimed in claim 9, **characterised in that** a cage (14) is provided in order to accommodate the closure element (5).

11. Pressure-regulating valve as claimed in one of claims 4 to 8, **characterised in that** the armature rod (10) and the slide valve (12) are made in a single piece.

12. Pressure-regulating valve as claimed in one of claims 4 to 11, **characterised in that** its actuating force is applied by the force which a solenoid exerts on the magnetic moment induced by a soft-iron armature.

13. Pressure-regulating valve as claimed in one of claims 4 to 12, **characterised in that** the inlet orifice has several radial inlet bores in the valve housing (1), which are linked via an annular passage to an upstream fixed throttle constituting a first throttle stage.

14. Pressure-regulating valve as claimed in one of claims 4 to 13, **characterised in that** the sealing surface (6) is provided on the end face of the armature rod (10).

15. Pressure-regulating valve as claimed in claim 14, **characterised in that** the region between the end face of the armature rod (10) and the slide valve (12) is designed in the form of a truncated cone.

16. Pressure-regulating valve as claimed in one of claims 4 to 15, **characterised in that** the armature (13) is pressed onto the armature rod (10).

17. Pressure-regulating valve as claimed in one of the preceding claims, **characterised in that** the diameter of the pin-shaped slide valve (12) is smaller than the diameter of the armature rod (10).

18. Use of a pressure-regulating valve as claimed in one of the preceding claims for regulating the hydraulic pressure operating gear switching elements in a motor vehicle.

## Revendications

1. Valve de réglage de pression comprenant un raccordement pour une conduite de pression (P), un raccordement pour une conduite de pression de travail (A) et un raccordement pour une conduite d'échappement (T) sur la pression environnante, et au moins deux étages d'ajutage ayant une résistance à l'écoulement définie ou pouvant être définie, parmi lesquels deux étages d'ajutage (109, 111) sont couplés de façon variable et sous influence mécanique ou hydraulique selon le principe du demi pont hydraulique et les deux étages d'ajutage variables sont prévus en qualité d'ajutages d'admission et d'échappement d'un espace de pression de réglage, et présentent chacun un corps obturateur, le corps obturateur de l'ajutage d'admission étant constitué par une bille (5) et le corps obturateur de l'ajutage d'échappement présentant une surface de fermeture étanche 6) possédant un siège plat, **caractérisé en ce que** le diamètre de la bille (5) est plus petit que le diamètre de la surface de joint étanche du siège plat.

2. Valve de réglage de pression selon la revendication 1, **caractérisée en ce qu'**elle peut être actionnée par voie magnétique ou électromagnétique.

3. Valve de réglage de pression selon la revendication 1, **caractérisée en ce qu'**elle peut être actionnée par voie piézoélectrique ou pneumatique.

4. Valve de réglage de pression selon la revendication 1 ou la revendication 2, **caractérisée en ce qu'**il est prévu un électro-aimant comprenant une armature (13) et une tige d'armature (10), et la tige d'armature (10) coopère avec un poussoir de commande (12) en forme de tige, qui fait suite à la tige d'armature (10) dans la direction axiale et peut écarter le corps obturateur de l'ajutage d'admission de son siège et établit ainsi les deux ajutages dans un mode couplé.

5. Valve de réglage de pression selon une des revendications précédentes, **caractérisée en ce qu'**elle est construite sous la forme d'un système de deux étages d'ajutage variables (109, 111) couplés sous influence mécanique ou hydraulique.

6. Valve de réglage de pression selon une des revendications 1 à 4, **caractérisée en ce qu'**il est réalisé sous la forme d'un système de trois étages d'ajutage, comprenant un premier étage d'ajutage fixe, côté pression (103) et deux étages d'ajutage variables, couplés sous influence mécanique ou hydraulique (109, 111).

7. Valve de réglage de pression selon une des revendications précédentes, **caractérisée en ce que** le corps obturateur (5) est réalisé en une seule pièce avec le poussoir de commande (12).

8. Valve de réglage de pression selon une des revendications précédentes, **caractérisée en ce que** les deux étages d'ajutage variables sont logés dans un élément, l'ajutage d'admission étant formé dans l'espace de pression de réglage (7) sous la forme d'un perçage à travers le corps (1) de la valve, qui peut être recouvert par un corps obturateur, et l'ajutage d'échappement étant réalisé sous la forme d'une soupape à siège, par le fait qu'une surface de paroi axiale (4) du corps (1) de la valve recouvre une surface de joint étanche (6) du corps obturateur, le poussoir de commande (12) en forme de tige pouvant écarter le corps obturateur de l'ajutage d'admission de son siège et établissant ainsi les deux ajutages en mode couplé par le fait que, d'une part, il fixe la section de l'ajutage d'admission par recouvrement de la surface du perçage d'entrée avec le corps obturateur et, d'autre part, il détermine la surface de l'ajutage d'échappement par la distance entre la surface de paroi axiale (4) et la surface de joint étanche (6).

9. Valve de réglage de pression selon une des revendications précédentes, **caractérisée en ce que** la tige d'armature (10) et le poussoir de commande (12) sont réalisés en deux pièces.

10. Valve de réglage de pression selon la revendication 9, **caractérisée en ce qu'**une cage (14) est prévue pour recevoir le corps obturateur (5).

11. Valve de réglage de pression selon une des revendications 4 à 8,**caractérisée en ce que** la tige d'armature (10) et le poussoir de commande (12) sont réalisés en une seule pièce.

12. Valve de réglage de pression selon une des revendications 4 à 11, **caractérisée en ce que** sa force de réglage est développée par la force qu'un électro-aimant exerce sur le moment magnétique induit d'une armature en fer doux.

13. Valve de réglage de pression selon une des revendications 4 à 12, **caractérisée en ce que** l'ajutage d'admission présente plusieurs perçages d'arrivée radiaux dans le corps (1) de la valve, qui sont reliés par un canal annulaire à un ajutage fixe placé en amont qui constitue le premier étage d'ajutage.

14. Valve de réglage de pression selon une des revendications 4 à 13, **caractérisée en ce que** la surface de joint étanche (6) est prévue sur une face frontale de la tige d'armature (10).

15. Valve de réglage de pression selon la revendication 14, **caractérisée en ce que** la région entre la surface frontale de la tige d'armature (10) et le poussoir de commande (12) est tronconique.

16. Valve de réglage de pression selon une des revendications 4 à 15, **caractérisée en ce que** l'armature (13) est emmanchée à force sur la tige d'armature (10).

17. Valve de réglage de pression selon une des revendications précitées, **caractérisée en ce que** le diamètre du poussoir de commande (12) en forme de tige est plus petit que le diamètre de la tige d'armature (10).

18. Utilisation d'une valve de réglage de pression selon une des revendications précédentes pour le réglage de la pression hydraulique pour l'actionnement des éléments de changement de rapport d'une boîte de vitesses dans un véhicule automobile.
